# EUROPÄISCHE PATENTSCHRIFT

(11) **EP 1 761 406 B1**
(45) Veröffentlichungstag und Bekanntmachung des Hinweises auf die Patenterteilung: **10.11.2010**
(21) Anmeldenummer: 05772777.8
(22) Anmeldetag: 24.06.2005
(51) Int. Cl.: B60H 1/00

(54) **KLIMAANLAGE, INSBESONDERE KRAFTFAHRZEUG-KLIMAANLAGE**
AIR-CONDITIONING SYSTEM, ESPECIALLY AUTOMOTIVE AIR-CONDITIONING SYSTEM
CLIMATISEUR, EN PARTICULIER CLIMATISEUR DE VEHICULE AUTOMOBILE

(30) Priorität: 24.06.2004 DE 102004030697
(43) Veröffentlichungstag der Anmeldung: 14.03.2007
(60) Teilanmeldung: 10183686.4
(73) Patentinhaber: Behr GmbH & Co. KG, 70469 Stuttgart (DE)
(72) Erfinder: KOUKOURAVAS, Evripidis, 72654 Neckartenzlingen (DE); ROTH, Dipl.-Ing. Michael, 70437 Stuttgart (DE)
(86) Internationale Anmeldenummer: PCT/EP2005/006851
(87) Internationale Veröffentlichungsnummer: WO 2006/000433

(56) Entgegenhaltungen:
- EP-A- 1 288 031
- WO-A-2004/000589
- GB-A- 2 217 440
- US-A1- 2003 145 978
- US-A1- 2004 016 536
- US-A1- 2005 178 538

## Beschreibung

Die Erfindung betrifft eine Klimaanlage, insbesondere Kraftfahrzeug-Klimaanlage, gemäß dem Oberbegriff des Anspruches 1 oder 2.

Bei herkömmlichen Klimaanlagen erfolgt für jede Änderung eine neue Auslegung derselben, insbesondere des Luftführungsgehäuses mit den darin angeordneten Luftführungskanälen bis hin zum Verdampfer, Heizer und gegebenenfalls Zuheizer. So ergibt sich, dass für jede Variante die gesamte Klimaanlage neu konstruiert werden muss und für jede Variante spezielle Werkzeuge erforderlich sind.

Die EP 1 288 031 A1 offenbart eine modular aufgebaute Kraftfahrzeug-Klimaanlage mit Mitteln zur Verteilung eines Haupt-Luftstroms, einem Verdampfer und einem Heizer zum Erwärmen eines zweiten Luftstroms. Die Klimaanlage ist in einem Gehäuse angeordnet. Den modularen Aufbau der Klimaanlage gibt es in wenigstens drei Versionen, nämlich für eine ein-, eine zwei- und eine dreizonige Klimaanlage, die für die Erzeugung eines Luftstroms mit vorgegebener Temperatur in den entsprechenden Zonen geeignet ist. Hierbei ist der äußere Aufbau der verschiedenen Versionen der Kilmaanlage identisch, unabhängig von der Zonenanzahl. Der modulare Aufbau wird im Wesentlichen durch eine Vielzahl unterschiedlicher Einlegeteile gebildet, welche das Gehäuse entsprechend der gewünschten Zonenanzahl unterteilen. Hierbei werden, jeweils der gewünschten Zonenanzahl entsprechend, Einlegeteile in das Luftführungsgehäuse eingebaut. Eine derartigere Klimaanlage lässt noch Wünsche offen.

Weitere gattungsgemäße Klimaanlagen sind aus US 2004/0016536 A1 und US2003/0145978A1 bekannt.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1 oder 2. Vorteilhafte Ausgestaltungen sind Gegenstand der Unteransprüche.

Erfindungsgemäß ist eine Klimaanlage, insbesondere Kraftfahrzeug-Klimaanlage, vorgesehen, mit einem mehrteilig ausgebildeten Luftführungsgehäuse und in demselben angeordneten Komponenten, wie mindestens einem Heizer, wobei das Luftführungsgehäuse im Bereich mindestens einer Komponente als Einsatzteil oder Modul ausgebildet ist. Bevorzugt ist ein Heizer und/oder Zuheizer in einem Einsatz angeordnet oder Teil des Einsatzes, der im Luftführungsgehäuse angeordnet ist. Dies ermöglicht eine bedarfsgerechte, das heißt unter anderem eine an die Klimazonenanzahl angepasste, Ausbildung der Kanäle und diesen zugeordneter Klappen, wie insbesondere Temperaturmischklappen. Ferner ermöglicht die Anordnung im Einsatz die breitere Verwendung des Luftführungsgehäuses, da spezielle Ausgestaltungen, beispielsweise für ein- und zweizonige und drei- und vierzonige Klimaanlagen, am Einsatz vorgenommen werden können, wie beispielsweise die Anordnung von Temperaturmischklappen und/oder gegebenenfalls auch das Vorsehen von Abdeckungen von beispielsweise im ein-und zweizonigen Anwendungsfall nicht benötigten Kanälen.

Bevorzugt erfolgt die Ausgestaltung des Einsatzteils als Einschubteil, welches auf einfache Weise von der Seite des Luftführungsgehäuses her in einen im Luftführungsgehäuse ausgebildeten, schachtartigen Einschub eingeschoben werden kann.

Der Einschub ist bevorzugt zwischen zwei oben und unten und/oder seitlich angeordneten Kaltluftkanälen angeordnet, so dass das Luftführungsgehäuse ausreichend stabil ausgebildet und der Einschub durch einen Schacht gebildet ist.

Vorteilhafterweise sind die in der Klimaanlage ausgebildeten Warmluftkanäle Teil des Einsatzteils, bzw. werden von den Wandungen des Einsatzteils begrenzt. Ein Kaltluftkanal ist entweder im Luftführungsgehäuse angeordnet oder ebenfalls Teil des Einsatzteils.

In einer Variante ist das Einsatzteil mehrteilig, insbesondere zwei-, drei-, oder vierteilig ausgebildet ist.

Die Klimaanlagen sind für im Bereich des Luftführungsgehäuses für unterschiedliche Zonenanzahlen im Wesentlichen gleich ausgebildet, wobei hierbei beispielsweise zonenspezifische Einlegeteile, Trennwände und/oder Abdeckungen vorgesehen sein können, und sich die einzelnen Klimaanlagen in Hinblick auf die unterschiedliche Zonenanzahl durch das Einsatzteil unterscheiden. Dies ermöglicht eine vereinfachte Konstruktion der verschiedenzonigen Klimaanlagen. Ferner lassen sich Klimaanlagen relativ einfach umbauen. Hauptvorteil ist jedoch die verbesserte Servicefreundlichkeit in Hinblick auf eine Reparatur oder einen Austausch des Heizers und/oder Zuheizers.

In einer Variante sind zwei Einsatzteile oder Module, Einschubteile, vorgesehen, welche bevorzugt von unterschiedlichen Seiten des Luftführungsgehäuses her eingebaut werden können. Die Teilung, insbesondere eine mittige Teilung, vereinfacht die Herstellung und Montage. Ferner kann eine Reparatur durch das Entfernen nur eines Einsatzteils erfolgen.

Im Folgenden wird die Erfindung anhand mehrerer Ausführungsbeispiele mit Varianten, teilweise unter Bezugnahme auf die Zeichnung, im Einzelnen erläutert. In der Zeichnung zeigen:
- Fig. 1: eine schematische Schnittdarstellung einer Kraftfahrzeug- Klimaanlage gemäß dem ersten Ausführungsbeispiel im zu- sammengebauten Zustand,
- Fig. 2: einen Teil der Kraftfahrzeug-Klimaanlage von Fig. 1 mit teilwei- se ausgebautem Modul,
- Fig. 3: einen Teil der Kraftfahrzeug-Klimaanlage von Fig. 1 mit ausge- bautem Heizer und Zuheizer,
- Fig. 4: eine Schnittdarstellung des ersten Ausführungsbeispiels aus einer anderen Perspektive,
- Fig.5: eine schematische Schnittdarstellung einer Kraftfahrzeug- Klimaanlage gemäß dem zweiten Ausführungsbeispiel im zu- sammengebauten Zustand,
- Fig. 6: einen Teil der Kraftfahrzeug-Klimaanlage von Fig. 5 mit aus- gebautem Modul,
- Fig. 7: eine schematische Schnittdarstellung einer Kraftfahrzeug- Klimaanlage gemäß dem dritten Ausführungsbeispiel im zu- sammengebauten Zustand, und
- Fig. 8: eine perspektivische Darstellung des dritten Ausführungs- beispiels mit ausgebautem Modul samt Heizer, und
- Fig. 9a - 9d: eine perspektivische Darstellung des vierten Ausfüh- rungsbeispiels eines Einbauteils, sowie Einzelteile desselben, ohne Heizer und Klappen, und
- Fig. 10a - 10c: eine perspektivische Darstellung des fünften Ausfüh- rungsbeispiels eines Teils eines Einbauteils, sowie Einzelteile desselben ohne Heizer und Klappen, und
- Fig. 11: eine schematische perspektivische Darstellung des vierten Ausführungsbeispiels eines Einbauteils mit eingebauten Klap- pen, und
- Fig. 12: eine schematische perspektivische Darstellung des fünften Ausführungsbeispiels eines Einbauteils mit eingebauten Klap- pen, und
- Fig. 13: eine schematische perspektivische Darstellung des sechsten Ausführungsbeispiels eines Moduls ohne Heizer und Klappen, und
- Fig. 14: eine schematische Schnittdarstellung durch das vierte oder fünfte Ausführungsbeispiel eines Einbauteils im eingebauten Zustand.

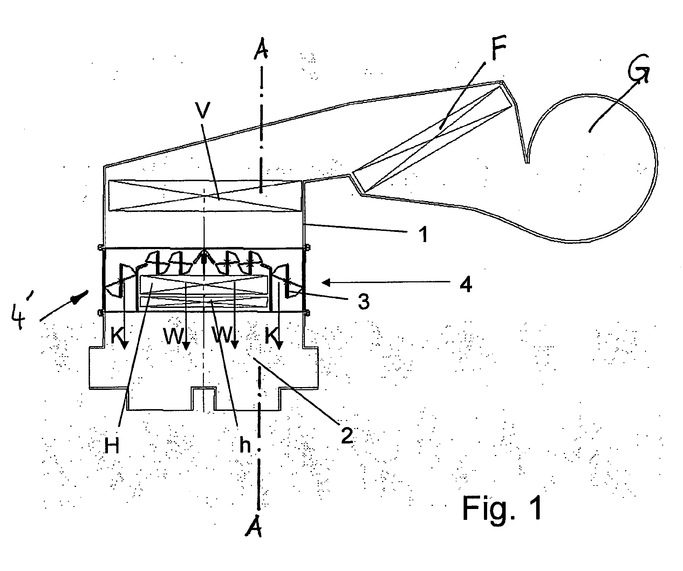

Eine vorliegend, wie in Fig. 1 dargestellt, zweizonig ausgebildete Kraftfahrzeug-Klimaanlage weist ein Luftführungsgehäuse 1 mit in demselben angeordnetem Heizer H, Zuheizer h und Verdampfer V auf, wobei das Luftführungsgehäuse 1 aus fertigungs- und montagetechnischen Gründen mehrteilig als Kunststoff-Spritzgussteil ausgebildet ist. Stromaufwärts des Verdampfers V ist ein Filter F und ein Gebläse G (nicht näher dargestellt) zur Förderung der zu klimatisierenden Luft angeordnet. In dem Luftführungsgehäuse 1 sind eine Mehrzahl von Luftkanälen 2 und Klappen 3 (vorliegend sind nur Temperaturmischklappen dargestellt) zur Steuerung der Luftströmung mit Hilfe von Einlegeteilen (nicht näher dargestellt) ausgebildet bzw. angeordnet. So sind zwei mittig angeordnete Warmluftkanäle W, durch welche die vom Verdampfer V kommende Luft durch den Heizer H und Zuheizer h geführt und hierin erwärmt wird, und je ein oben und unten angeordneter Kaltluftkanal K, welche die vom Verdampfer V kommende Luft am Heizer H und Zuheizer h vorbeiführen, vorgesehen. Die Lufttemperierung und/oder Luftverteilung erfolgt mit Hilfe der Temperaturmischklappen. Anstelle der schematisch dargestellten zweiflügeligen Klappen, können selbstverständlich auch einflügelige Klappen, Schiebeklappen, Rollbandkassetten, Lamellenklappen und ähnliche Klappenanordnungen Verwendung finden.

Der Heizer H und der Zuheizer h, welcher durch PTC-Elemente gebildet ist, sind mitsamt der Temperaturmischklappen in zwei Modulen 4, 4' angeordnet, welche beispielsweise mit den Außenwandungen 9 auch einen Teil des mehrteiligen Luftführungsgehäuses 1 bilden. Jedes Modul 4, 4' ist als Einsatzteil, vorliegend als ein Einschubteil, ausgebildet, welches in einen vom Hauptteil des Luftführungsgehäuses 1 gebildeten schachtartigen Einschub 5 von der Seite eingeschoben werden kann, wofür die Kanten des Hauptteils des Luftführungsgehäuses 1 und des Moduls 4 entsprechende Führungen und Abdichtungen aufweisen. Die Module 4, 4' sind derart mit dem Luftführungsgehäuse 1 verbunden, dass der Strömungsverlauf der Luft geringstmöglich negativ beeinflusst wird, wofür die Innenwand des Luftführungsgehäuse 1 im Wesentlichen stetig in die Wandung der Module übergeht, so dass möglichst keine Kanten im Bereich der Übergänge in den Luftströmungsweg hineinragen.

Eine etwa spiegelbildliche Ausbildung einzelner Module ist in den Bezugszeichen mit einem gestrichenen Index angedeutet. Im Folgenden wird der Einfachheit halber für die weiteren Bauteile darauf verzichtet.

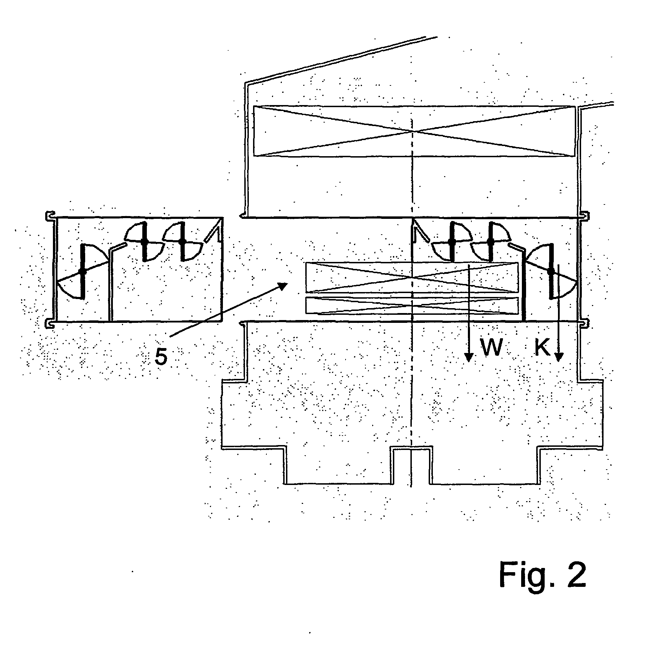

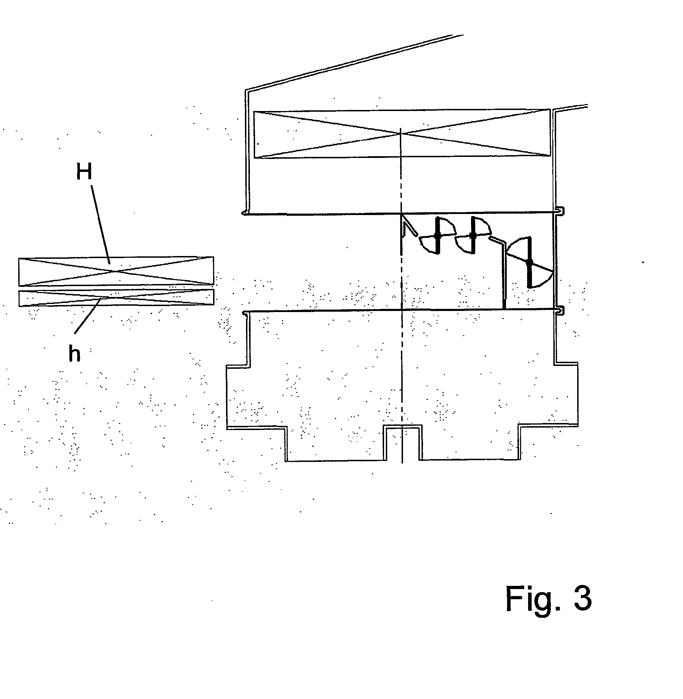

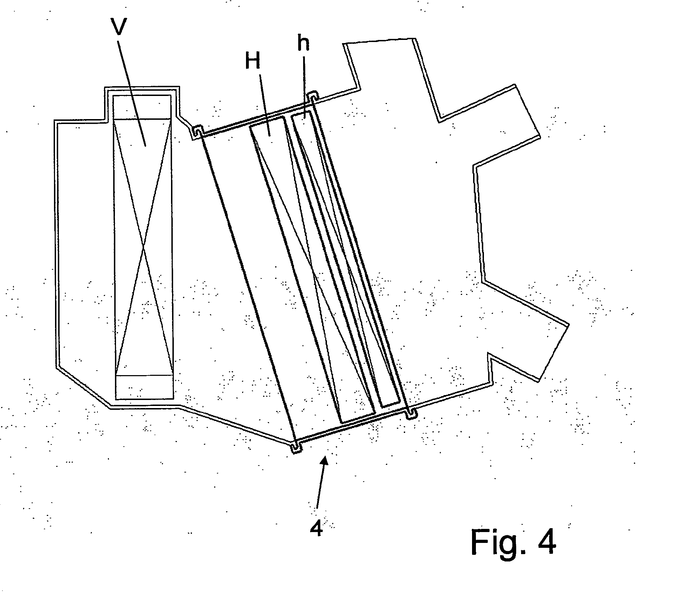

Gemäß dem ersten Ausführungsbeispiel sind zwei Module 4, 4', für jede Klimazone eines, vorgesehen, wobei die Module 4, 4' von unterschiedlichen Seiten eingeschoben und herausgezogen werden können. Soll beispielsweise der Heizer H mit dem Zuheizer h ausgetauscht werden, so wird eines der Module 4, 4' gelöst, herausgezogen (Fig. 2) und anschließend kann der Heizer H mit dem Zuheizer h entnommen und ersetzt werden (Fig.3). Anschließend wird das Modul 4, 4' wieder eingeschoben und befestigt. Fig. 4 zeigt eine Schnittdarstellung entlang der Ebene A-A von Fig.1. Die sich zwischen Heizer H und Verdampfer V befindliche Klappenanordnung bzw. die Klappen 3 sind in Fig. 4 nicht dargestellt.

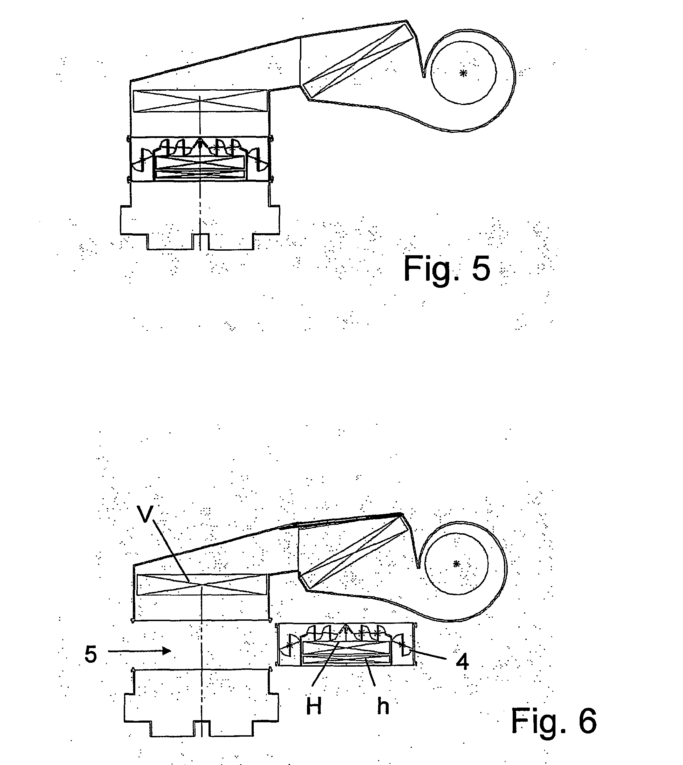

Gemäß dem zweiten, in den Figuren 5 und 6 dargestellten Ausführungsbeispiel sind der Heizer H und Zuheizer h direkt in einem über die gesamte Breite des Luftführungsgehäuses 1 gehenden Modul 4 integriert, welches ebenfalls die Temperaturmischklappen 3 umfasst. Das Modul 4 bildet ebenfalls ein Einschubteil, welches in einen entsprechend ausgebildeten Einschub 5 von der Seite des Luftführungsgehäuses 1 eingeschoben wird.

Ebenfalls ist gemäß einer Variante eine Anordnung eines Verdampfers in einem vergleichbaren Modul möglich. Auf Grund der Variationsmöglichkeiten in Hinblick auf die Zonenanzahl, die verbunden mit Trennwänden im Bereich von Heizer und Zuheizer ist und insbesondere Auswirkungen auf die Anzahl der Temperaturmischklappen und/oder eine Koppelung derselben hat, ist der modulare Aufbau aber besonders im Bereich von Heizer/Zuheizer vorteilhaft.

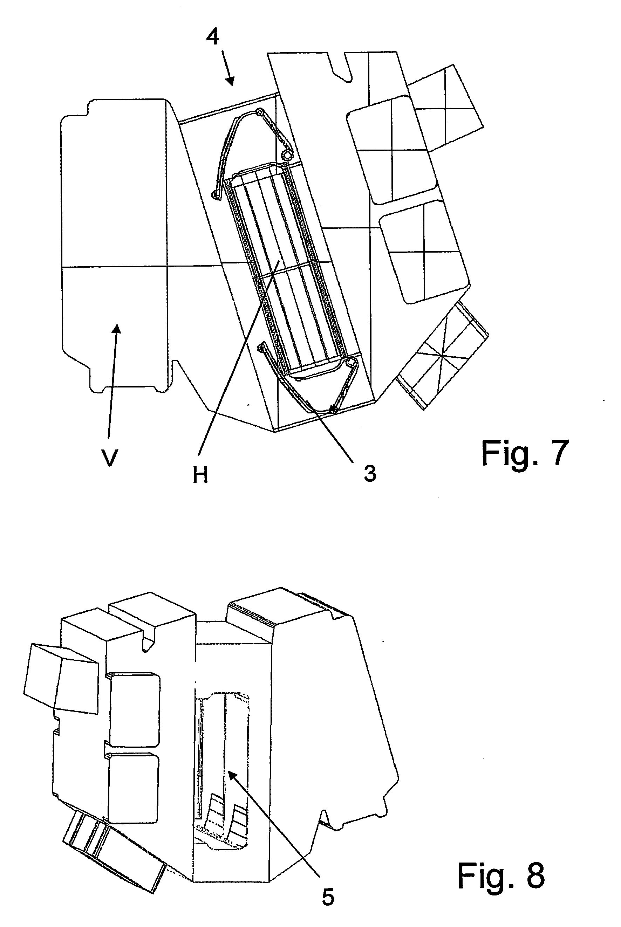

In den Figuren 7 und 8 ist ein drittes Ausführungsbeispiel einer vierzonigen Klimaanlage mit Heizer H, vorliegend ohne Zuheizer, jedoch kann ein solcher durchaus auch vorgesehen sein, dargestellt. Dieser Heizer H ist samt den oberen und unteren Temperaturmischklappen 3 für jede Seite Teil des Moduls 4, welches in einen schachtartigen Einschub 5 eingeführt ist und als eine Einheit zwischen den oben und unten angeordneten Kaltluftkanälen in das Luftführungsgehäuse ein- und ausgebaut werden kann. Im linken Teil von Fig. 7 und im rechten Teil von Fig. 8 ist der Verdampfer V angeordnet, welcher nicht explizit dargestellt ist. Bei den Temperaturmischklappen 3 des dritten Ausführungsbeispiels handelt es sich um kombinierte Schwenk-Schiebeklappen.

Gemäß einer nicht in der Zeichnung dargestellten Variante des dritten Ausführungsbeispiels ist eine dreizonige Klimaanlage vorgesehen, welche drei Temperaturmischklappen aufweist, nämlich zwei obere und eine untere Temperaturmischklappe.

Entsprechend zweier weiterer Varianten des dritten Ausführungsbeispiels ist eine zweizonige Klimaanlage vorgesehen, welche gemäß einer ersten Ausführungsform zwei Temperaturmischklappen, nämlich für jede Seite eine, die unten jeweils zugespitzt sind, und gemäß einer zweiten Ausführungsform vier Temperaturmischklappen aufweist, welche miteinander gekoppelt sind.

In einer letzten Variante für eine einzonige Klimaanlage ist - unter Verwendung des gleichen Luftführungsgehäuses - lediglich eine Temperaturmischklappe oben vorgesehen. Die unteren Öffnungen sind verschlossen. Alternativ kann unten ebenfalls eine Temperaturmischklappe vorgesehen sein, die beispielsweise mit der oberen gekoppelt ist.

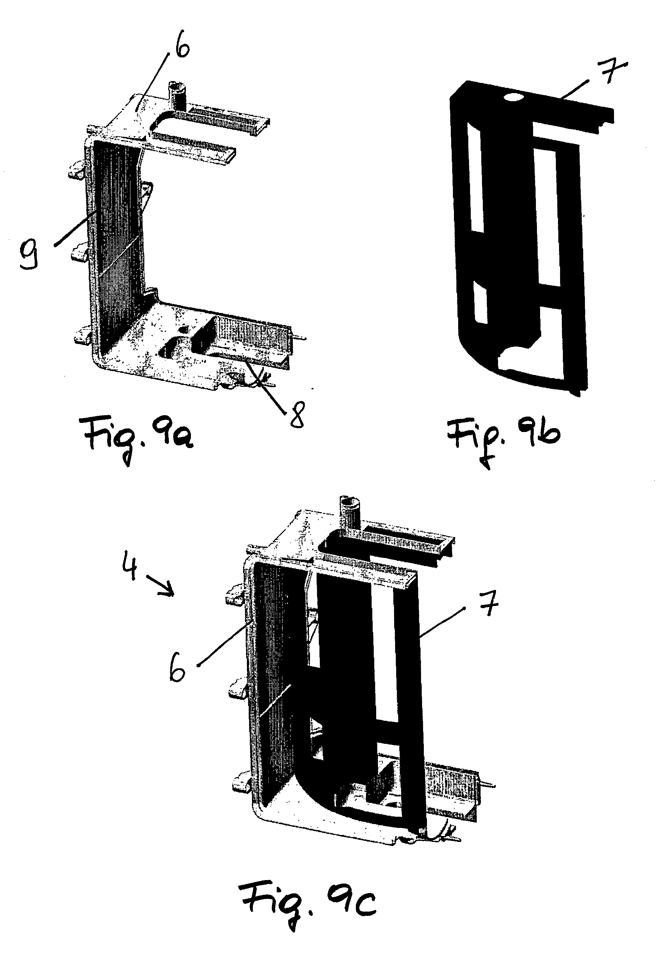

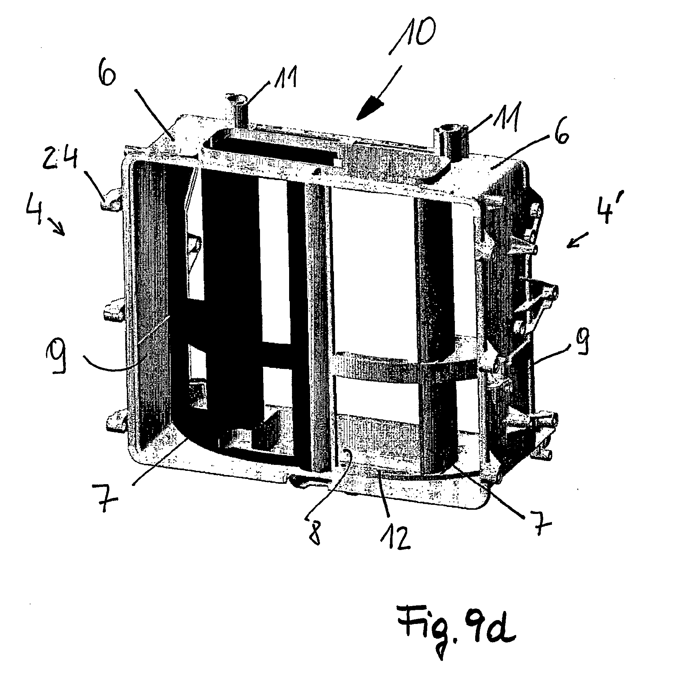

In den Figuren 9a bis 9d ist ein weiteres der Erfindung folgendes Modul 4 dargestellt, welches zweiteilig aufgebaut ist. Es besteht im Wesentlichen aus einem Außenteil 6 und einem Innenteil 7. Die beiden Teile 6, 7 werden zu dem in Fig. 9c dargestellten Modul oder Einsatzteil 4 zusammengefügt. Insbesondere bei der Herstellung dieses Moduls 4 mittels Kunststoffgießens bzw. Kunststoffspritzgießens ist eine mehrteilige Ausführung vorteilhaft. Durch Zusammenfügen, beispielsweise Schweißen, Schrauben, Clipsen oder Ähnlichem eines solchen Moduls 4 mit einem im Wesentlichen spiegelbildlich ausgebildeten weiteren Modul 4' entsteht gemäß der Darstellung in Fig. 9d ein komplexes direkt in das Luftführungsgehäuse einer Kraftfahrzeug-Klimaanlage integrierbares Einbauteil 10. Im vorliegenden Beispiel ist jeweils eine Temperaturmischklappe im linken Modul 4 und im rechten Modul 4' vorgesehen, die in den Figuren 9 jedoch nicht dargestellt sind. Im unteren sowie im oberen Bereich des Einbauteils sind nutartige Führungen 12, sowie Lagerstellen 11 für die als Temperaturmischklappen eingesetzten kombinierten Schwenk- Schiebeklappen vorgesehen. Im in die Klimaanlage eingebauten Zustand des Einbauteils 10, bilden die Außenwandungsbereiche 9 der Module 4 und 4' die Wandung des Luftführungsgehäuses 1 der Klimaanlage. Für den Anschluß des Einbauteils 10 an das Luftführungsgehäuse sind vorteilhafterweise umlaufende Dichtbereiche, beispielsweise Dichtlippen, Dichtringe, und/oder eine Nut oder Feder, die mit dem entsprechenden Gegenstück des Luftführungsgehäuses in Eingriff gebracht werden können, vorgesehen. Zudem wird das Einbauteil mit dem Luftführungsgehäuse verschraubt, wobei hierfür am Einbauteil 10 Schraubdome 24 ausgebildet sind. Für einen Heizer H, sowie optional einen Zuheizer h ist ein Aufnahme 8 im Bodenbereich der Module 4, 4' vorgesehen. Ein einfacher Austausch des Heizers H und/oder Zuheizers h wird durch eine Einfuhröffnung im oberen Bereich der Module 4, 4' ermöglicht, jedoch kann der Ausbau des Heizers H und/oder Zuheizers h auch durch Entfernen eines oder beider Module 4, 4' erfolgen.

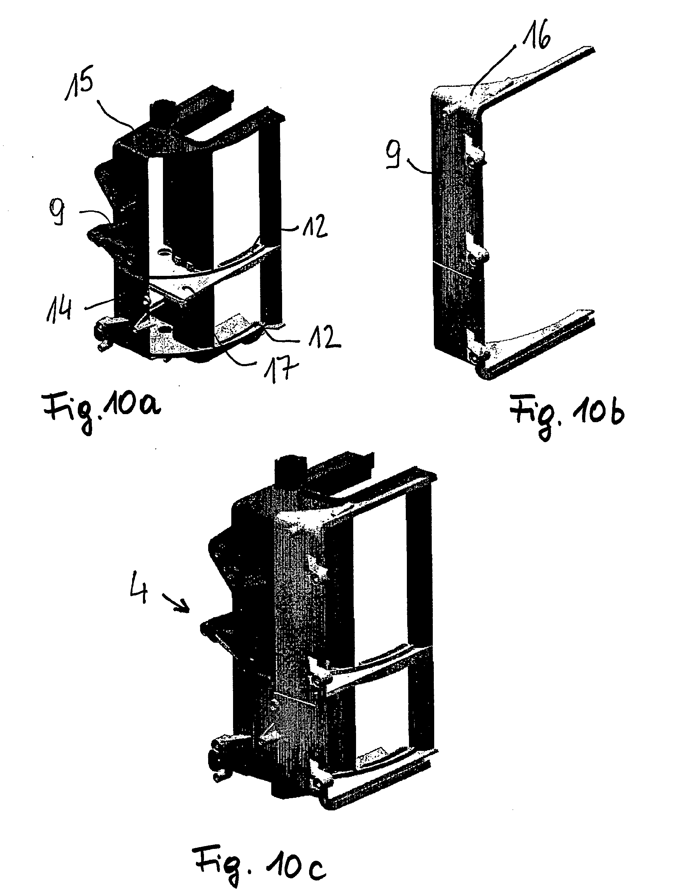

Insbesondere für mehrzonige Klimaanlagen und die dafür unter Umständen aufwändigeren Ausführungen der Luftführungsgehäuse, kann es für eine einfache Entformbarkeit vorteilhaft sein, ein dem Erfindungsgedanken folgendes Modul 4, 4' aus drei oder mehr Teilen zusammengesetzt auszuführen. Ein solches Modul bzw. Einsatzteil 4 ist in den Figuren 10a bis 10c dargestellt. Dabei wird das Modul 4 aus einem Oberteil 15, einem Unterteil 14 und einem Rahmenteil 16 gebildet. Die drei Teile sind untereinander wieder dichtend verbindbar, insbesondere verschraub, verclips - und/oder verschweißbar. Mittels eines nicht dargestellten im Wesentlichen spiegelbildlich ausgebildeten Moduls 4' entsteht ein Einbauteil 10, welches wiederum einen Heizer H und/oder einen Zuheizer h aufnimmt und als Luftführungs-und Lufttemperiereinheit dient. Als weiterer Unterschied zum in den Figuren 9 dargestellten Ausführungsbeispiel, ist ein Zwischenboden 17 vorgesehen, der als separates Teil in die Anordnung integrierbar bzw. mit dieser verbindbar ist oder Teil des Oberteils 15 oder des Unterteils 14 ist. Der Zwischenboden teilt die Anordnung in obere und untere Luftführungskanäle entsprechend der Ausbildung von Zonen für die weitere Klimatisierung des Innenraums.

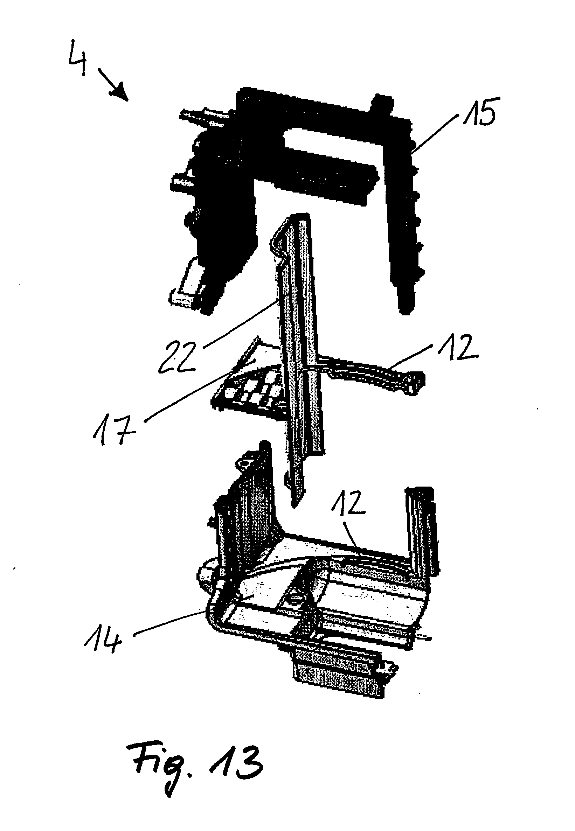

Ein weiteres Ausführungsbeispiel für eine dreiteilige Ausführung eines Moduls 4, vorliegend in ein Oberteil 15, ein Unterteil 14 und einen Zwischenboden 17 ist in Fig. 13 dargestellt. Der Zwischenboden weist einen Steg 22 auf der sich mittels seiner Enden im zusammengebauten Zustand im Eingriff mit dem Oberteil 15 und dem Unterteil 14 befindet.

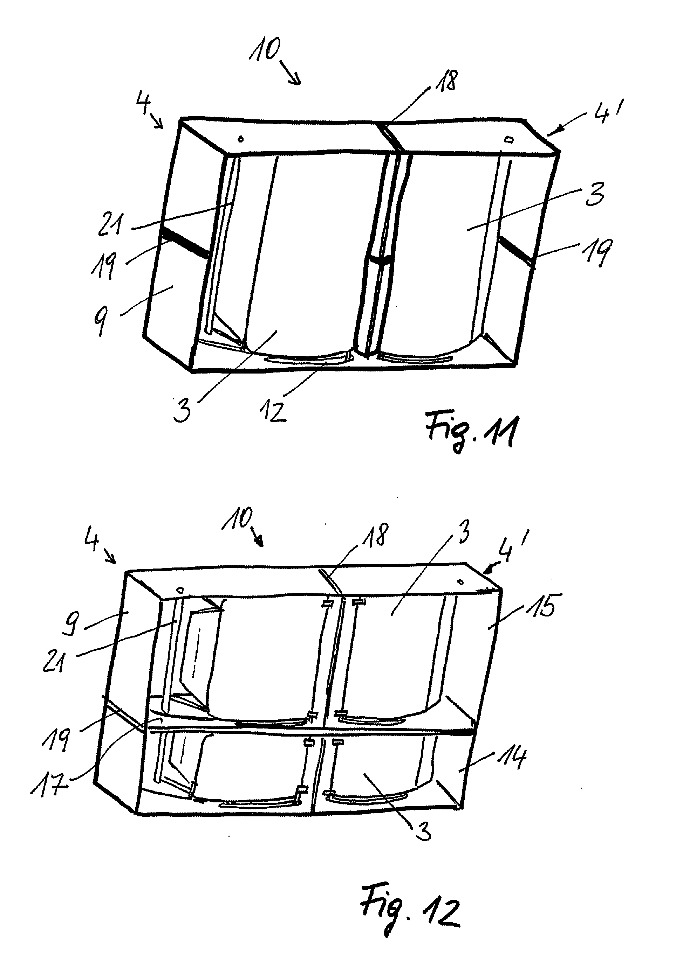

In den Figuren 11 und 12 ist jeweils ein Einbauteil 10 mit einer entsprechenden Klappenanordnung zur Temperierung der hindurchtretenden Luft dargestellt. In dem in Fig. 11 gezeigten Einbauteil ist ein Modul 4 mit einem im Wesentlichen spiegelbildlichen Modul 4' an der Vertikaltrennfuge 18 miteinander verbunden. Optional aber nicht notwendigerweise können die Module 4, 4' zweiteilig oder dreiteilig ausgeführt und an einer Horizontaltrennfuge 19 miteinander verbunden sein. In jedem der Module ist eine Schwenk- Schiebeklappe 3 angeordnet, die über eine Schwenkachse 21 und über einen Zapfen, der in eine langlochartige Führung 12 eingreift schwenk- und verschiebbar im Einbauteil 10 gelagert ist. Die Anordnung der Klappen 3 ist spiegelbildlich bezüglich der Mittelebene im Bereich der vertikalen Trennfuge 18.

Im vorliegenden Beispiel ist der Luftweg durch den Heizkörper H geschlossen und nur die seitlichen Kaltluftkanäle K sind geöffnet. Die Schwenk-Schiebeklappen 3 können bis an die Innenseite der Außenwandung 9 der Module bewegt werden und dabei die Kaltluftkanäle verschließen und den Weg der Luft durch den Heizkörper H, h freigeben. In Zwischenstellungen der Klappe 3 erhält man hinter dem Einbauteil 10 Mischluft aus kalter und warmer Luft, die dann entsprechend den Zonen der Klimaanlage, vorliegend sind dies zwei, dem Fahrzeuginnenraum zugeführt werden können. Durch eine einfache mechanische Kopplung der beiden Klappen, beispielsweise, durch eine außerhalb des Gehäuses angebrachte Koppelvorrichtung, erhält man aus der zweizonigen eine einzonige Klimaanlage.

In Unterscheidung zu dem in Fig.11 dargestellten Ausführungsbeispiel weist die in Fig. 12 dargestellte Anordnung, einen Zwischenboden 17 im horizontalen Trennbereich 19 auf. Die Module 4, 4' bestehen somit jeweils aus einem Oberteil 15, einem Unterteil 14 und dem Zwischenboden oder Zwischeneinlegeteil 17. Durch die Ausbildung von vier Klappen 3 ist eine vierzonige Klimaanlage realisierbar, wobei die oberen Klappen 3 zur Temperierung des Luftmassenstroms in den Frontraum eines Fahrzeuges in ihrer Fläche etwas größer als die unteren Klappen 3 zur Temperierung des Luftmassenstroms in den Fondraum eines Fahrzuges ausgeführt sind.

Um bei der Fertigung aus einer vierzonigen Klimaanlage, eine dreizonige Klimaanlage mit vereinfachter Steuerung zu machen, ist eine mechanische Klappenkoppelung vorgesehen, welche beispielsweise die zwei unteren Klappen 3 für den Fondraum verbindet, so dass sie über eine gemeinsame Steuervorrichtung steuerbar sind. Somit sind anstelle von vier Steuervorrichtungen, beispielsweise Elektromotoren nur drei Steuervorrichtungen erforderlich. Vorteilhafterweise erfolgt die Kopplung außerhalb des Luftführungsgehäuses 1, so dass zumindest der Innenraum der Klimaanlage für die drei-und vierzonige Variante identisch ausgebildet sind.

Prinzipiell kann aus der vierzonigen Klimaanlage durch entsprechende Kopplungen auch eine zwei- oder gar einzonige Klimaanlage mit entsprechend vereinfachter Steuerung gemacht werden, so dass sehr große Stückzahlen zumindest für Teile des Luftführungsgehäuses und das Einbauteil möglich sind, wodurch die Herstellungskosten gesenkt werden können. So lassen sich beispielsweise der Front- und der Fondbereich oder die rechte Seite und die linke Seite jeweils untereinander koppeln. Die in den Fig. 11 und 12 dargestellten Einbauteile 10 können in Ihrer Gesamt mit dem Luftführungsgehäuse der Klimaanlage verbunden werden.

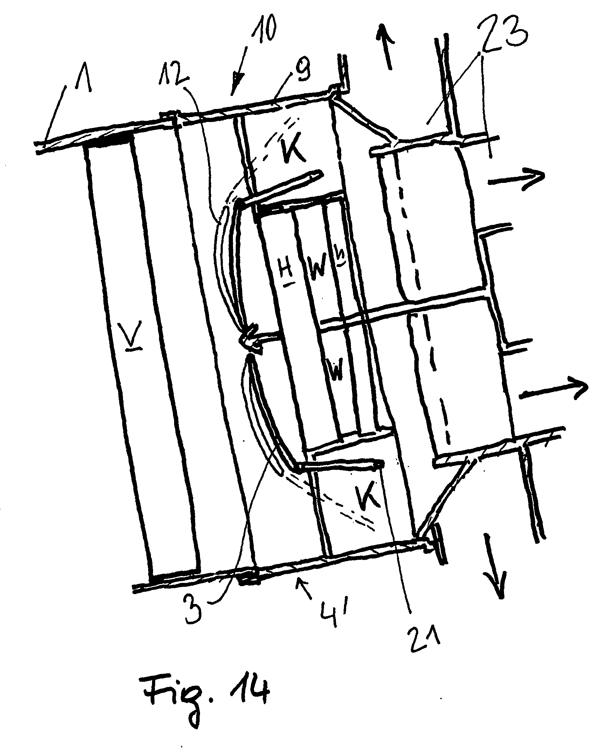

Fig. 14 zeigt einen Schnitt durch ein Einbauteil 10 nach Fig. 11 oder 12 im in eine Klimaanlage eingebauten Zustand. Die Öffnungen der Kaltluftkanäle K und der Warmluftkanäle W, werden durch die Klappen 3 mittels einer Schwenk- Schiebebewegung gesteuert. Das Einbauteil 10 ist als kompettes Einsatzteil in das Luftführungsgehäuse 1 der Klimaanlage integriert, wobei die Wandungen 9 der Module 4, 4' einen Teil des Luftführungsgehäuses 1 bilden, welches an der Einbaustelle durchbrochen ist. Im Bereich nach dem Einbauteil 10, schließt sich die Luftverteileinheit an, die mit Luftauslässen bzw. Luftkanälen 23 und eventuellen Luftstromsteuermitteln wie beispielsweise Klappen ausgeführt ist und die, die Aufgabe hat, die mittels der Klappen 3 und der Wärmetauscher V, H, h temperierte Luft den einzelnen Luftausströmbereichen im Fahrzeuginnenraum wie Belüftung-, Defrost- oder Fußraumauslässen im Front und/oder Heckbereich zuzuführen.

## Patentansprüche

1. Klimaanlage, insbesondere Kraftfahrzeug-Klimaanlage, mit einem mehrteilig ausgebildeten Luftführungsgehäuse (1) und in demselben angeordneten Komponenten, wie mindestens einem Heizer (H; h), wobei das Luftführungsgehäuse (1) im Bereich mindestens einer Komponente als Einsatzteil in Form von Modulen (4) als Einschubteile ausgebildet ist, **dadurch gekennzeichnet, dass** sich die Module zusammen genommen (4) über die gesamte Breite des Luftführungsgehäuses (1) erstrecken, wobei die Module (4, 4'), deren Teilung ohne Versatz senkrecht zur Einschubrichtung ausgerichtet ist, von unterschiedlichen Seiten in die Klimaanlage einschiebbar sind und die Außenwandungsbereiche (9) der Module (4, 4') die Wandung des Luftführungsgehäuses (1) der Klimaanlagen bilden.

2. Klimaanlage, insbesondere Kraftfahrzeug-Klimaanlage, mit einem mehrteilig ausgebildeten Luftführungsgehäuse (1) und in demselben angeordneten Komponenten, wie mindestens einem Heizer (H; h), wobei das Luftführungsgehäuse (1) im Bereich mindestens einer Komponente als Einsatzteil in Form von Modulen (4) als Einschubteile ausgebildet ist, **dadurch gekennzeichnet, dass** sich ein Modul (4) über die gesamte Breite des Luftführungsgehäuses (1) erstreckt, und die Außenwandungsbereiche (9) des moduls (4,4') die Wandung des Luftführungsgehäuses (1) der Klimaanlage bildet,
wobei die Klimaanlage eine mehrzonige Klimaanlage ist, die mindestens ein Einsatzteil aufweist, welche die Luftkanäle der einzeinen Zonen voneinander trennt.

3. Klimaanlage nach Anspruch 1, oder 2 **dadurch gekennzeichnet, dass** das Luftführungsgehäuse (1) im Bereich der Komponente als Einschub (5) ausgebildet ist.

4. Klimaanlage nach Anspruch 1, 2 oder 3, **dadurch gekennzeichnet, dass** in einem Einsatzteil der Heizer (H; h) angeordnet ist.

5. Klimaanlage nach Anspruch 4, **dadurch gekennzeichnet, dass** der Heizer (H; h) fest in das Einsatzteil integriert ist und einen Teil desselben bildet.

6. Klimaanlage nach einem der vorhergehenden Ansprüche, **dadurch gekennzeichnet, dass** in einem Einsatzteil Temperaturmischklappen (3) angeordnet sind.

7. Klimaanlage nach Anspruch 6, **dadurch gekennzeichnet, dass** die Temperaturmischklappen (3) fest in ein Einsatzteil integriert sind und einen Teil desselben bilden.

8. Klimaanlage nach einem der vorhergehenden Ansprüche, **dadurch gekennzeichnet, dass** die Klimaanlage im Bereich des Luftführungsgehäuses (1) für unterschiedliche Zonenanzahlen im Wesentlichen gleich ausgebildet ist und sich durch ein Einsatzteil unterscheiden.

9. Klimaanlage nach einem der vorhergehenden Ansprüche 1, und 3 bis 8, **dadurch gekennzeichnet, dass** die Klimaanlage eine mehrzonige Klimaanlage ist, die mindestens ein Einsatzteil aufweist, welche die Luftkanäle der einzelnen Zonen voneinander trennt.

10. Klimaanlage nach einem der vorhergehenden Ansprüche, **dadurch gekennzeichnet, dass** die Einsatzteile einen im Wesentlichen spiegelbildlichen Aufbau haben.

11. Klimaanlage nach einem der vorhergehenden Ansprüche, **dadurch gekennzeichnet, dass** ein oder mehrere Warmluftkanäle (W) mittig und ein oder mehrere Kaltluftkanäle (K) seitlich und/oder oben und/oder unten bezüglich der Warmluftkanäle (W) ausgebildet sind.

12. Klimaanlage nach Anspruch 11, **dadurch gekennzeichnet, dass** der Warmluftkanal (W) Teil eines Einsatzteils ist.

13. Klimaanlage nach Anspruch 10 oder 12, **dadurch gekennzeichnet, dass** der Kaltluftkanal (K) im Luftführungsgehäuse (1) angeordnet ist und nicht Teil des Einsatzteils ist.

14. Klimaanlage nach Anspruch 11 oder 12, **dadurch gekennzeichnet, dass** der Kaltluftkanal (K) Teil des Einsatzteils ist.

15. Klimaanlage nach einem der vorhergehenden Ansprüche, **dadurch gekennzeichnet, dass** das Einsatzteil mehrteilig ausgebildet ist.

16. Klimaanlage nach einem der vorhergehenden Ansprüche, **dadurch gekennzeichnet, dass** die Klimaanlage zumindest eines der folgenden Bauteile umfasst: Verdampfer, Filter, Mischkammer, eine oder mehrere Steuerklappen zur Verteilung der Luft auf die Luftauslässe.

## Claims

1. An air conditioning system, in particular motor vehicle air conditioning system, having a multi-part air guide housing (1) and components, such as at least one heater (H; h), arranged therein, wherein the air guide housing (1) is formed, in the region of at least one component, as an insert part in the form of modules (4) as slide-in parts, **characterized in that** the modules (4), in entirety, extend along the entire width of the air guide housing (1), wherein the modules (4, 4'), the spacing of which is oriented without offset perpendicular to the slide-in direction, can be inserted into the air conditioning system from different sides, and the outer wall regions (9) of the modules (4, 4') form the walls of the air guide housing (1) of the air conditioning system.

2. An air conditioning system, in particular motor vehicle air conditioning system, having a multi-part air guide housing (1) and components, such as at least one heater (H; h), arranged therein, wherein the air guide housing (1) is formed, in the region of at least one component, as an insert part in the form of modules (4) as slide-in parts, **characterized in that** one module (4) extends along the entire width of the air guide housing (1), and the outer wall regions (9) of the module (4, 4') form the walls of the air guide housing (1) of the air conditioning system, wherein the air conditioning system is a multi-zone air conditioning system that includes at least one insert part which separates the air ducts of the individual zones from one another.

3. The air conditioning system as claimed in claim 1, **characterized in that** the air guide housing (1) is formed in the region of the component as a slide-in region (5).

4. The air conditioning system as claimed in claim 1, 2 or 3, **characterized in that** the heater (H; h) is arranged in an insert part.

5. The air conditioning system as claimed in claim 4, **characterized in that** the heater (H; h) is fixedly integrated into the insert part and forms a part thereof.

6. The air conditioning system as claimed in one of the preceding claims, **characterized in that** temperature mixing flaps (3) are arranged in an insert part.

7. The air conditioning system as claimed in claim 6, **characterized in that** the temperature mixing flaps (3) are fixedly integrated into the insert part and form a part thereof.

8. The air conditioning system as claimed in one of the preceding claims, **characterized in that** the air conditioning system is designed so as to be substantially identical in the region of the air guide housing (1) for different numbers of zones, and differ by one insert part.

9. The air conditioning system as claimed in one of the preceding claims 1 and 3 through 8, **characterized in that** the air conditioning system is a multi-zone air conditioning system which has at least one insert part which separates the air ducts of the individual zones from one another.

10. The air conditioning system as claimed in one of the preceding claims, **characterized in that** the insert parts are of a substantially mirror-symmetrical design.

11. The air conditioning system as claimed in one of the preceding claims, **characterized in that** one or more warm air ducts (W) are formed centrally and one or more cold air ducts (K) are arranged to the side of and/or above and/or below the warm air ducts (W).

12. The air conditioning system as claimed in claim 11, **characterized in that** the warm air duct (W) is part of an insert part.

13. The air conditioning system as claimed in claim 11 or 12, **characterized in that** the cold air duct (K) is arranged in the air guide housing (1) and is not part of the insert part.

14. The air conditioning system as claimed in claim 11, **characterized in that** the cold air duct (K) is part of the insert part.

15. The air conditioning system as claimed in one of the preceding claims, **characterized in that** the insert part is of multi-part design.

16. The air conditioning system as claimed in one of the preceding claims, **characterized in that** the air conditioning system comprises at least one of the following components: evaporator, filter, mixing chamber, one or more control flaps for distributing the air between the air outlets.

## Revendications

1. Système de climatisation, en particulier système de climatisation d'un véhicule automobile, comprenant un carter de guidage d'air (1) configuré en plusieurs parties et des composants disposés dans ce carter de guidage d'air, comme au moins un dispositif de chauffage (H ; h), où le carter de guidage d'air (1), dans la zone d'au moins un composant, est configuré comme une pièce rapportée se présentant sous la forme de modules (4) réalisés comme des pièces emboîtables,
**caractérisé en ce que** les modules (4), pris dans leur ensemble, s'étendent sur toute la largeur du carter de guidage d'air (1), où les modules (4, 4') dont la séparation, sans décalage, est orientée perpendiculairement à la direction d'emboîtement, sont emboîtables dans le système de climatisation, de différents côtés, et les zones de parois extérieures (9) des modules (4, 4') forment la paroi du carter de guidage d'air (1) du système de climatisation.

2. Système de climatisation, en particulier système de climatisation pour un véhicule automobile, comprenant un carter de guidage d'air (1) configuré en plusieurs parties et des composants disposés dans ce carter de guidage d'air, comme au moins un dispositif de chauffage (H ; h), où le carter de guidage d'air (1), dans la zone d'au moins un composant, est configuré comme une pièce rapportée se présentant sous la forme de modules (4) réalisés comme des pièces emboîtables,
**caractérisé en ce qu'**un module (4) s'étend sur toute la largeur du carter de guidage d'air (1), et les zones de parois extérieures (9) du module (4, 4') forment la paroi du carter de guidage d'air (1) du système de climatisation, où le système de climatisation est un système de climatisation à zones multiples, système qui présente au moins une pièce rapportée qui sépare, les uns des autres, les conduits d'air des différentes zones.

3. Système de climatisation selon la revendication 1 ou 2, **caractérisé en ce que** le carter de guidage d'air (1) est configuré, dans la zone des composants, comme une pièce emboîtable (5).

4. Système de climatisation selon la revendication 1, 2 ou 3, **caractérisé en ce que** le dispositif de chauffage (H ; h) est disposé dans une pièce rapportée.

5. Système de climatisation selon la revendication 4, **caractérisé en ce que** le dispositif de chauffage (H ; h) est intégré à la pièce rapportée, de façon fixe, et forme une partie de cette pièce rapportée.

6. Système de climatisation selon l'une quelconque des revendications précédentes, **caractérisé en ce que** des volets mélangeurs de température (3) sont disposés dans une pièce rapportée.

7. Système de climatisation selon la revendication 6, **caractérisé en ce que** les volets mélangeurs de température (3) sont intégrés à une pièce rapportée, de façon fixe, et forment une partie de cette pièce rapportée.

8. Système de climatisation selon l'une quelconque des revendications précédentes, **caractérisé en ce que** le système de climatisation, dans la zone du carter de guidage d'air (1), est configuré de façon pratiquement identique pour différents nombres de zones et se différencie par une pièce rapportée.

9. Système de climatisation selon l'une quelconque des revendications 1 et 3 à 8, **caractérisé en ce que** le système de climatisation est un système de climatisation à zones multiples qui présente au moins une pièce rapportée qui sépare, les uns des autres, les conduits d'air des différentes zones.

10. Système de climatisation selon l'une quelconque des revendications précédentes, **caractérisé en ce que** les pièces rapportées ont une structure pratiquement symétrique.

11. Système de climatisation selon l'une quelconque des revendications précédentes, **caractérisé en ce qu'**un ou plusieurs conduits d'air chaud (W) est ou sont configuré(s) au milieu, et un ou plusieurs conduits d'air froid (K) est ou sont configuré(s) latéralement et / ou en haut et / ou en bas par rapport aux conduits d'air chaud (W).

12. Système de climatisation selon la revendication 11, **caractérisé en ce que** le conduit d'air chaud (W) fait partie d'une pièce rapportée.

13. Système de climatisation selon la revendication 11 ou 12, **caractérisé en ce que** le conduit d'air froid (K) est disposé dans le carter de guidage d'air (1) et ne fait pas partie de la pièce rapportée.

14. Système de climatisation selon la revendication 11 ou 12, **caractérisé en ce que** le conduit d'air froid (K) fait partie de la pièce rapportée.

15. Système de climatisation selon l'une quelconque des revendications précédentes, **caractérisé en ce que** la pièce rapportée est configurée en plusieurs parties.

16. Système de climatisation selon l'une quelconque des revendications précédentes, **caractérisé en ce que** le système de climatisation comprend au moins l'un des composants suivants : un évaporateur, un filtre, une chambre de mélange, un ou plusieurs volets de commande servant à la répartition de l'air aux sorties d'air.
